# NEUE EUROPÄISCHE PATENTSCHRIFT

(11) **EP 2 881 018 B2**
(45) Veröffentlichungstag und Bekanntmachung des Hinweises auf die Entscheidung über den Einspruch: **11.10.2023**
(45) Hinweis auf die Patenterteilung: 26.09.2018
(21) Anmeldenummer: 14196061.7
(22) Anmeldetag: 03.12.2014
(51) Int. Cl.: A47J 31/52

(54) **Vorrichtung zur automatisierten Bereitung eines Heißgetränks**
Device for automated preparation of a hot drink
Dispositif de préparation automatisée d'une boisson chaude

(30) Priorität: 04.12.2013 DE 102013113499
(43) Veröffentlichungstag der Anmeldung: 10.06.2015
(73) Patentinhaber: Eugster/Frismag AG, 8580 Amriswil (CH)
(72) Erfinder: Rechsteiner, Bruno, 8588 Ziehlschlacht (CH)
(74) Vertreter: Patent- und Rechtsanwälte Behrmann Wagner PartG mbB

(56) Entgegenhaltungen:
- WO-A1-2011/029813
- WO-A1-2011/067227
- WO-A1-2011/067232
- WO-A2-01/12038
- DE-U1-202009 003 896
- US-A1- 2012 156 343

## Beschreibung

Die vorliegende Erfindung betrifft eine Vorrichtung zur automatisierten Bereitung eines Heißgetränks nach dem Oberbegriff des Hauptanspruchs, wie sie in der DE 20 2009 003 896 U1 beschrieben ist.

Eine derartige Vorrichtung ist auch beispielsweise in Form eines üblichen Kaffeevollautomaten allgemein bekannt und setzt sich, neben Anwendungen in der professionellen Gastronomie, zunehmend auch im Heim- und Bürobereich als attraktive Alternative zu traditionellen Formen der Kaffeebereitung durch.

Am Beispiel der vollautomatischen Kaffeebereitung für den gehobenen Privatbereich zeigen sich in den letzten Jahren zudem signifikante technologische Fortschritte; nicht nur sind zunehmend leistungsfähige Geräte (sogenannte Vollautomaten, welche Kaffeebohnen zunächst zu Kaffeemehl vermahlen und dann in einer Brüheinheit das trinkfertige Heißgetränk fertigstellen) mit günstigen Kosten großserientauglich herstellbar und damit zunehmend auch für die private Zielgruppe attraktiv, auch wächst mit der steigenden Durchsetzung und Akzeptanz dieser anspruchsvollen Technologien das Verständnis von Verbrauchern für qualitativ hochwertigen Kaffee und dessen fachgerechte Zubereitung. Ergebnis ist neben einem wachsenden Bedürfnis nach individueller Konfigurier- und Einstellbarkeit derartiger Vorrichtungen auch ein steigender Bedarf von Bedienpersonen (insbesondere im privaten Anwendungsbereich), Hilfestellungen bzw. Unterstützungen bei der Bedienung, einer etwaigen Fehlersuche und -behebung im Alltagsbetrieb zu erhalten; gerade die mit den zunehmend leistungsfähigen Geräten verbundene technologische Komplexität überfordert häufig das technische Grundverständnis von Bedienpersonen. Einher geht dies mit einer kontinuierlich sinkenden Akzeptanz etwa schriftlicher Bedienungsanleitungen o.dgl. Dokumentationen; diese werden, nicht zuletzt aufgrund des - notwendigen - Umfangs, oftmals überhaupt nicht gelesen und wenn, dann von signifikanten Zielgruppen nicht verstanden.

Aus Gründen der Betriebssicherheit sowie der Sicherstellung des dauerhaften zuverlässigen Betriebs erfordern jedoch gerade anspruchsvollere Heißgetränke-Bereitungsvorrichtungen regelmäßige Pflege- und Wartungsarbeiten, welche jedoch, aus den o.g. Gründen, durch die Komplexität und (etwa für die private Zielgruppe) erschwerte Verständlichkeit häufig unterbleiben. Unerwünschte Konsequenz ist, dass eine unzureichende Wartung bzw. Befassung mit dem anspruchsvollen Gerät zu Fehlfunktionen oder gar Ausfällen führt, was wiederum bei den angesprochenen Zielgruppen die Akzeptanz für anspruchsvolle Heißgetränk-Bereitungstechnologie unerwünscht herabsetzt.

Zum weiteren Stand der Technik wird verwiesen auf die WO 2001/067227 A1 sowie die WO 2011/029813 A1.

Aufgabe der vorliegenden Erfindung ist es daher, eine Vorrichtung zur automatisierten Bereitung eines Heißgetränks nach dem Oberbegriff des Hauptanspruchs zu schaffen, welche auch über einen längeren Betriebszeitraum hohe Betriebssicherheit und zuverlässigen Betrieb gewährleistet, dabei die Möglichkeit für eine benutzer- und situationsgerechte Wartung, Fehlersuche und -behebung schafft und dabei eine Bedienperson in die Lage versetzt, die jeweils gebotenen Bedien- und Wartungsmaßnahmen durchzuführen, ohne vorab umfassende technische Dokumentationen studieren zu müssen.

Die Aufgabe wird durch die Vorrichtung zur automatisierten Bereitung eines Heißgetränks mit den Merkmalen des Hauptanspruchs gelöst; vorteilhafte Weiterbildungen der Erfindung sind in den Unteransprüchen beschrieben.

In erfindungsgemäß vorteilhafter Weise sind den im Vorrichtungsgehäuse zur Ansteuerung der Brüh- bzw. Zerkleinerungsmittel zugeordneten Steu ermitteln Datenkommunikationsmittel in Form einer erfindungsgemäßen elektronischen Datenübertragungsschnittstelle zugeordnet, welche die Heißgetränk-Bereitungsvorrichtung (im bevorzugten Ausführungsbeispiel einen Kaffee-Vollautomaten) mit einer über das Datenübertragungsnetz, bevorzugt das Internet als öffentliches Datenübertragungsnetz, angebundenen Servereinheit verbindet. Diese Servereinheit wiederum, weiter bevorzugt als zentralisierte Einheit zum Zusammenwirken mit einer Vielzahl von über das öffentliche Datenübertragungsnetz angebundenen Heißgetränk-Bereitungsvorrichtungen ausgestaltet, ermöglicht nunmehr einerseits eine zielgerichtete Überwachung einer jeweiligen Bereitungsvorrichtung auf ordnungsgemäßen Betrieb, etwaige Fehlfunktionen oder Wartungsbedarf, indem von der Bereitungsvorrichtung Betriebsdaten zur Serverseite übertragen werden und dort noch einer geeigneten Verarbeitung, ggf. Auswertung und Diagnose die erfindungsgemäßen betriebszustandspezifischen Daten zu der Bereitungsvorrichtung (zurück) übertragen werden, um dort eine geeignete Reaktion bzw. Information (der Bedienperson) auszulösen. Gleichermaßen sieht die Erfindung vor, dass geeignet zur Beeinflussung der Bereitungsvorrichtung vorgesehen Konfigurationsdaten von der Server- bzw. Datenverarbeitungseinheit über das (öffentliche) Datenübertragungsnetz herangeführt und dort empfangen werden, so dass auch etwa eine situations-, benutzer- oder materialspezifische Konfiguration der Heißgetränk-Bereitungsvorrichtung mit Serverunterstützung durchgeführt werden kann.

Während in einem weitgehend autonomen Betriebszustand diese erfindungsgemäßen Vorgänge ohne aktives Eingreifen der Bedienperson oder ohne einen Interaktions- oder Betriebsdialog mit dieser Betriebsperson stattfinden können, sieht die vorliegende Erfindung alternativ und weiterbildungsgemäß gleichwohl vor, die erfindungsgemäße Funktionalität zu einer (kondensierten und zielgerichteten) Information und Einbindung dieser Bedienperson zu nutzen. So ist es weiterbildungsgemäß im Rahmen der Erfindung vorgesehen, den Steuermitteln eine akustisch und/oder optisch wirksame Ausgabeeinheit zuzuordnen, welcher weiterbildungsgemäß etwa als übliche Displayeinheit (zur Text- und/oder Bildanzeige) ausgebildet sein kann; alternativ kann diese Ausgabeeinheit auch wiederum realisiert sein durch die weiterbildungsgemäß bzw. fakultativ vorgesehene weitere vorrichtungsseitige (d.h. bezogen auf das Datenübertragungsnetz auf der Seite der Vorrichtung vorgesehene) Datenverarbeitungseinheit (etwa ein Smartphone). Diese Ausgabeeinheit gestattet es dann, aus den vorrichtungsseitig empfangenen betriebszustandsspezifischen oder anforderungsspezifischen Daten geeignete Informationen zu erzeugen, welche der Bedienperson in einer für diese verständlichen, kompakten, zielgerichteten und aktuellen Form dargeboten werden können. So liegt es etwa im Rahmen bevorzugter Ausgestaltungen der Erfindung, diese Informationen sowohl in Form von (fokussierten) Betriebsanweisungen für eine Bedienung oder einen Betrieb der Bereitungsvorrichtung auszugestalten (wobei auch Rezepte o.dgl. vorteilhaft Anweisungen samt zugehörigen Geräteparametrisierungen als derartige Betriebsanweisung gelten sollen); gleichermaßen können die nutzerseitige Informationen Einstellungsanweisungen, Fehlerbehegungsanweisungen, Wartungsanweisungen oder Entsorgungsanweisungen aufweisen, wobei diese Angaben weit und umfassend zu begreifen sind und neben reinen Textausgaben auch beliebig audiovisuell dargestellt bzw. aufbereitet sein können. Im Rahmen bevorzugter Weiterbildungen dieses Aspekts der Erfindung liegt es zudem, die an die Bedienperson auszugebenden Informationen durch auch über den konkreten Gerätekontext hinausgehende Informationen zu ergänzen, wie etwa Werbe- oder Produktinformationen mit dem Zweck einer Kundenbindung, einer Verkaufsförderung o.dgl. Maßnahmen.

Im Rahmen bevorzugter Ausgestaltungen der Erfindung liegt es, den erfindungsgemäßen und serverseitig auszuwertenden Betriebsdaten Zeiterfassungsdaten aus dem aktuellen oder vergangenen Betrieb der Bereitungsvorrichtung zuzuordnen; hierzu gehört etwa eine aktuelle, eine vorhergehende und/oder eine kumulierte Betriebs- und/oder Einschaltdauer der Steuermittel bzw. der Brüh- bzw. Zerkleinerungsmittel. Da geeignete Wartungs- oder Austauschintervalle sich typischerweise nach der Betriebszeit bemessen, ist es damit dem erfindungsgemäßen System, insbesondere der server- bzw. Datenverarbeitungseinheit, ermöglicht, aus diesen Zeiterfassungsdaten einen aktuellen Wartungszustand der betreffenden Bereitungsvorrichtung zu diagnostizieren und damit der Bedienperson (bzw. den Steuermitteln) Informationen über gebotene Wartungsmaßnahmen zu geben.

Dies gilt auch für die weiterbildungsgemäß zu detektierenden Temperatur- bzw. Füllstandsdaten (etwa der Brüh- bzw. Zerkleinerungsmittel oder eines zugeordneten Flüssigkeitsbehälters), wobei derartige Betriebsparameter alternativ oder ergänzend übertragen und ausgewertet werden können.

Besondere Flexibilität im Rahmen einer bevorzugten Weiterbildung der Erfindung ermöglicht das geräteseitige Zuordnen einer mobil bzw. portabel ausgestalteten Datenverarbeitungseinheit auf der Vorrichtungsseite. Eine derartige, etwa mittels eines üblichen und geeignet anwendungsspezifisch zu programmierenden Smartphones realisierte Datenverarbeitungsvorrichtung, welche drahtlos - etwa über ein WLAN oder per Bluetooth - und bevorzugt lokal, d.h. in örtlicher Nähe und benachbart (etwa in Sichtweite) der Heißgetränke-Bereitungsvorrichtung angebunden ist, ermöglicht es dann einer Bedienperson, noch flexibler und ggf. mit erweiterten medialen Möglichkeiten, die geräteseitig empfangenen Daten aufbereitet und dargestellt zu bekommen; eine potenziell synergistische Wirkung besteht zudem darin, dass eine derartige, geräteseitige mobile Datenverarbeitungseinheit eine (potenziell aufwändige) Darstellungs- bzw. Ausgabeeinheit an oder in dem Vorrichtungsgehäuse überflüssig macht, so dass insoweit der zur effektiven Realisierung der Erfindung notwendige Hardwareaufwand deutlich minimiert werden kann, indem (im Regelfall ohnehin vorhandene) Smartphone-Infrastruktur o.dgl. Technologie eingebunden wird.

Während es im Rahmen der Erfindung bevorzugt ist, als Datenübertragungsnetz zur Anbindung der Server- bzw. Datenverarbeitungseinheit das Internet zu verwenden und zu diesem Zweck geeignete Internet-Protokolltechnologien zu implementieren, ist die vorliegende Erfindung gleichwohl nicht auf diese Variante beschränkt, vielmehr ist es im Rahmen der Erfindung gleichermaßen möglich, auch proprietäre drahtgebundene oder drahtlose Datenübertragungsnetze einzusetzen, etwa mit dem Zweck einer technischen Vereinfachung, eines Schutzes gegen unbeabsichtigte Zugriffe Dritter oder zur Verbindung mit bereits vorhandenen Datenübertragungs-Infrastrukturen (etwa einem Bussystem) an einem Einsatzort.

Eine in der Praxis besonders bedeutsame Weiterentwicklung der Erfindung erfährt diese dadurch, dass geräteseitig (also in der Bereitungsvorrichtung) oder serverseitig eine Identifikation und/oder Individualisierung einer jeweils die Bedienung und den Betrieb vornehmenden Bedienperson erfolgt. Während die Identifikation zwar prinzipiell durch beliebige Identifikationsmittel, eingeschlossen einzugebende Codes, Chipkarten oder die Identifikation des vorteilhaft einbezogenen Smartphones erfolgen kann, ist es gleichermaßen vorteilhaft im Rahmen der Erfindung, diese Identifikation aus bislang erfolgten Betriebsvorgängen und damit den entsprechenden vorliegenden Betriebsdaten zu erzeugen. Vorteilhaft ist, dass diese Daten dann sowohl Präferenzen o.dgl. Eigenschaften einer Bedienperson erkennen lassen, welche gleichermaßen identifizierend und individualisierend sind, gleichzeitig jedoch auch Erkenntnisse über einen (technischen bzw. gerätespezifischen) Kenntnisstand der Bedienperson ermöglichen, so dass die dann gezielt zu erzeugende und zu übertragende Information dies berücksichtigen kann; die gewünschte erhöhte Akzeptanz seitens der Bedienperson, verbunden mit zu erwartender signifikant reduzierter Rate an Bedienfehlern ist die vorteilhafte Konsequenz. Das Verfolgen einer Datenhistorie über einen längeren Zeitraum lässt dann die Möglichkeit zu, geeignete und zielgruppengerechte Werbeinformationen zuzuführen.

Im Ergebnis ermöglicht es die vorliegende Erfindung damit, auf überraschend einfache und wirksame Art die - zunehmend komplexe - Technologie auf Benutzerseite wirksam zu unterstützen, indem einerseits ein Benutzer von technisch anspruchsvollen und komplexen Überwachungsmaßnahmen entlastet wird, andererseits, etwa im Hinblick auf zielgerichtete und damit betriebssichere Wartung und Fehlerbehebung einer Bedienperson zeitnah und zielgerichtet die jeweils notwendigen, geeignet für das Verständnis aufbereiteten Informationen übermittelt werden können. Darüber hinaus gestattet es die vorliegende Erfindung, die Bedienperson in ein System einzubinden, welches den Bedien- und Betriebskomfort erleichtert, sinnvolle und (potentiell gewünschte) Informationen zur Darstellung heranführt und so das durch die Heißgetränk-Bereitungsvorrichtung ermöglichte Geschmacks- und Genusserlebnis durch sinnvolle Zusatzinformationen ergänzt.

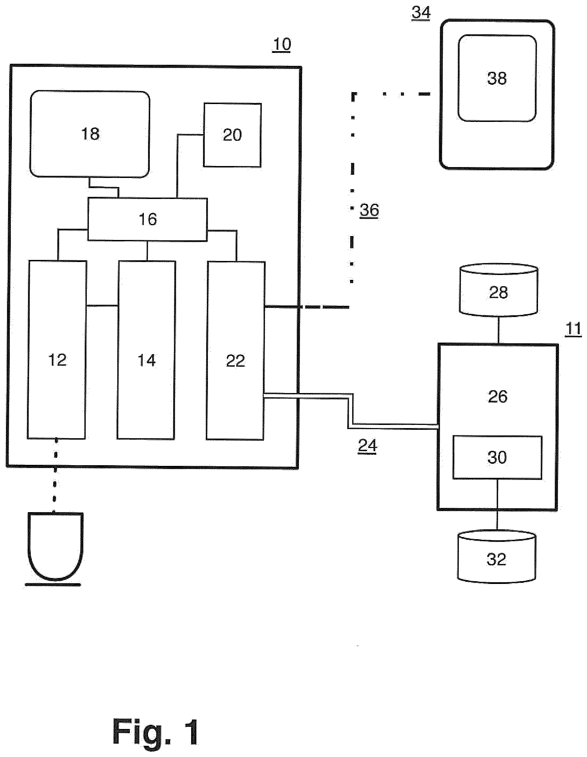

Weitere Vorteile, Merkmale und Einzelheiten der Erfindung ergeben sich aus der nachfolgenden Beschreibung bevorzugter Ausführungsbeispiele sowie anhand der einzigen Figur; diese zeigt in
- Fig. 1:: ein schematisches Blockdiagramm der erfindungsgemäßen Vorrichtung zur automatisierten Bereitung eines Heißgetränks am Beispiel eines Kaffee-Vollautomaten eines ersten Ausführungsbeispiels, im Zusammenwirken mit einer über das Internet angebundenen Servereinheit sowie einer lokal drahtlos angebundenen Smartphone-Mobiltelefoneinheit als mobile Datenverarbeitungseinheit.

Das Bezugszeichen 10 verdeutlicht im Schaubild der Fig. 1 einen KaffeeVollautomaten, welcher in ansonsten bekannter Weise eine Bereitungseinheit 12 bestehend aus einer Brüh-, einer Mahleinheit sowie einer Behältereinheit für geeignet zu erwärmendes Wasser aufweist. Jeweilige Betriebszustände dieser Bereitungsinfrastruktur (welche als solche bekannt ist) werden durch eine Sensor- bzw. Erfassungseinheit 14 erfasst, wobei zu den Betriebszuständen verschiedenste Betriebsparameter gehören, wie etwa Einschaltzustände, Betriebstemperaturen, Füllgrade bzw. Füllstände, geeignete Mahlparameter od.dgl. Diese Daten liegen einer zentralen Steuereinheit 16 (Steuermittel) an, welche in ansonsten bekannter Weise mittels einer Mikroprozessor- oder Mikrocontrollereinheit realisiert ist.

Mit der Steuereinheit 16 ist wiederum eine Ausgabeeinheit 18, etwa in Form eines geeigneten graphikfähigen Displays (alternativ können aber lediglich auch einfache Leuchtsignalgeber vorhanden sein, oder aber ein Display kann vollständig entfallen) verbunden; eine Eingabeeinheit 20, etwa realisiert in Form von manuell betätigbaren Tasten, ermöglicht das Auswählen von Betriebsmodi, das Konfigurieren oder andere manuelle Eingaben durch eine Bedienperson.

Mit der Steuereinheit 16 ist ferner verbunden eine Datenübertragungsschnittstelle 22, welche zunächst unter Nutzung gängiger Internetprotokolle eine (drahtgebundene oder drahtlose) Anbindung einer Servereinheit 11 über das Internet gestattet. Diese Servereinheit, etwa in Form einer für eine Vielzahl von Bereitungsvorrichtungen 10 zentralisiert vorhandener Einheit, ist lediglich schematisch dargestellt und weist eine zentrale Auswertungs-, Diagnose- und Informationseinheit 26 auf, welche in nachfolgend zu beschreibender Weise auf der Basis von aus dem Kaffee-Vollautomaten 10 gewonnenen Betriebsdaten Zustandsdiagnosen erstellt und, wiederum über das Datenübertragungsnetz 24, an die Einheit 10 geeignete Informationen, Anweisungen bzw. Konfigurationen zurückleitet. Zu diesem Zweck greift die Einheit 26 auf eine serverseitige Datenspeichereinheit 28 zu, welche etwa als Diagnosedatenbank konfiguriert ist, ergänzend oder alternativ auch eine Vielzahl möglicher Medien zur gezielten Auswahl, Übertragung und Darstellung auf der Geräteseite (10) bereitstellt. Zusätzlich ist serverseitig im Rahmen der Einheit 12 eine Identifikationseinheit 30 vorgesehen, welche auf der Basis der vom Bereitungsgerät 10 empfangenen Daten eine Benutzeridentifikation vornimmt, geeignete Identifikationsdaten in einer zugeordneten serverseitigen Speichereinheit 32 ablegt und so die Möglichkeit schafft, dass entsprechend einem erfassten bzw. (durch kontinuierliche Prozessbeobachtung entstehenden) Bedienperson- bzw. Benutzerprofil einer solchen, jeweiligen Bedienperson jeweils spezifische Informationen und Daten, sowohl betreffend etwaige Informationsbedürfnisse, Vorlieben als auch jeweils vorliegende kognitive Verständnis- und Erfassungsmöglichkeiten, darbietet.

Die Fig. 1 verdeutlicht eine zusätzliche bevorzugte Variante der Interaktion einer Bedienperson mit der Bereitungsvorrichtung 10. Mit dem Bezugszeichen 34 ist eine mobile Datenverarbeitungseinheit bezeichnet, welche typischerweise etwa mittels eines Smartphones o.dgl. generischer Technologie realisiert sein kann, in üblicher Weise einen berührungsempfindlichen Bildschirm 38 als Darstellungs- und Eingabeeinheit aufweist und etwa in der durch die Strichpunktlinie 36 gezeigten Weise drahtlos (z.B. über Bluetooth, eine WLAN-Einbindung o.dgl.) lokal, also auf der Geräteseite des Netzes 24, mit der Einheit 10 zusammenwirkt. Konkret können auf diese Weise etwa die erweiterten Möglichkeiten einer solchen mobilen Einheit 34 zur audio-visuellen Ausgabe von Informationen genutzt werden, ohne dass etwa eine entsprechend komplexe Ausgabetechnologie selbst im Gehäuse (verdeutlicht durch die Umrisslinie der Einheit 10) vorhanden sein muss; zusätzliche vorteilhafte Möglichkeiten ergeben sich durch eine mit einer jeweiligen Einheit 34 bereits verbundene Identifikation einer zugehörigen Bedienperson, und in (nicht gezeigter) Weiterbildung der Erfindung könnten Datenkommunikationseigenschaften einer derartigen mobilen Datenverarbeitungseinheit, geräteseitig an die Einheit 10 angebunden sein, die die in der Fig. 1 gezeigte separate Internet-Verbindung 24 zur Servereinheit 11 ersetzen, so dass insoweit eine Datenkommunikation entlang der Einheiten 10 - 34 - 11 und zurück erfolgen könnte.

Im Betrieb der in Fig. 1 schematisch gezeigten systemischen Anordnung würde bei der Benutzung und dem Erzeugen des gewünschten Heißgetränks eine datenmäßige Überwachung auf ordnungsgemäße Betriebszustände der Vorrichtung erfolgen; falls gewünscht, erhält die Bedienperson jeweils (weiterbildungsgemäß personenspezifisch auf die Bedürfnisse zugeschnitten) Bedien- und Hilfsinformationen, ergänzend oder alternativ auch Informationen über das jeweils hergestellte Getränk und weitere Hintergründe, etwa verwendete Kaffeebohnen, zugehörige Eigenschaften o.dgl. Ermöglicht wird dies dadurch, dass nach Inbetriebnahme und ggf. Identifikation der Bedienperson durch Übertragung von Betriebsdaten über den Pfad 24 zur Servereinheit 11 eine geeignete Datenauswertung den Zugriff auf dort gespeicherte Informationen ermöglicht, welche dann wiederum zum Gerät 10 zur Darstellung an den Benutzer (etwa über das Display 18, ergänzend oder alternativ über das angebundene Smartphone und dessen Display 38) erfolgen kann.

Sollte nunmehr eine Problem- oder Störungssituation auftreten, erhält die Bedienperson automatisch geeignete Hinweise zur Fehlerbehebung oder für notwendige Schritte, da entsprechend die Fehlerinformationen aufweisende Betriebsdaten serverseitig diagnostiziert werden können und eine entsprechende Reaktion bzw. Information auslösen können; die serverseitige Datenübertragung ist dabei nicht auf das Übertragen von lediglich darzustellenden Informationen beschränkt, sondern kann vielmehr auch unmittelbar Einfluss nehmen auf eine Stellung, Parametrisierung (oder gar eine Abschaltung) von Einheiten der Bereitungsvorrichtung, etwa mit dem Zweck, ein Aggregat innerhalb der Vorrichtung 10 vor weiteren Beschädigung zu schützen. Je nach Bedürfnis der Bedienperson (was diese entweder geeignet auswählt, alternativ aus bisherigem oder voreingestelltem Verhaltensprofil ermittelt wird) können diese Vorgänge vollständig intransparent und automatisiert ablaufen, ohne dass eine weitergehende Information an die Bedienperson erfolgt; alternativ kann diese auch vollständig über die Maßnahmen aufgeklärt werden (wiederum durch geeignete Ausgaben bzw. Anzeigen) und ggf. auch weitergehenden manuellen Schritten oder Maßnahmen aufgefordert werden.

Die vorliegende Erfindung ist nicht auf das gezeigte Ausführungsbeispiel beschränkt; vielmehr sind nahezu beliebige Varianten denkbar, wie sowohl geräteseitig (also auf Seiten der Heißgetränk-Bereitungsvorrichtung 10) Daten erfasst, gesendet und Informationen empfangen und aufbereitet werden können, auch ist serverseitig (d.h. auf der Seite der Einheit 11 des Datennetzes 24) eine nahezu beliebige Aus- und Weiterentwicklung der Auswertung, Aufbereitung und Erzeugung von Daten bzw. Informationen möglich, wobei dies insbesondere auch durch Verbünde mit weiteren Servereinheiten o.dgl. geschehen kann.

### Bezugszeichenliste

- 10: Kaffe-Vollautomat
- 11: Servereinheit
- 12: Bereitungseinheit
- 14: Sensor- bzw. Erfassungseinheit
- 16: Steuereinheit
- 18: Ausgabeinheit
- 24: Internetverbindung
- 26: Einheit
- 28: Datenspeichereinheit
- 30: Identifikationseinheit
- 34: mobile Datenverarbeitungseinheit
- 36: Strichpunktlinie
- 38: Bildschirm

## Patentansprüche

1. Vorrichtung zur automatisierten Bereitung eines Heißgetränks mit in einem Vorrichtungsgehäuse (10) vorgesehenen Brüh- und/oder Zerkleinerungsmitteln (12) für einen Ausgangsstoff des Heißgetränks sowie diesem zugeordneten Steuermitteln (16),
die als Reaktion auf eine bevorzugt manuelle Betätigung einer am oder im Vorrichtungsgehäuse vorgesehen Bedieneinheit (20) einen Bereitungsbetrieb zum Bereiten des Heißgetränks steuern, wobei
den Steuermitteln eine elektronische Datenübertragungsschnittstelle (22) zur bidirektionalen Übertragung von den Bereitungsbetrieb beeinflussenden Konfigurationsdaten und/oder aus dem Bereitungsbetrieb erzeugten Betriebsdaten über ein bevorzugt öffentliches Datenübertragungsnetz (24) an eine datenmäßig angebundene Server- und/oder Datenverarbeitungseinheit (11) so zugeordnet ist, dass als Reaktion auf einen vorbestimmten, aus den Betriebsdaten detektierten Betriebszustand, insbesondere Wartungs- und/oder Fehlerbetriebszustand, betriebszustandspezifische Daten von der Server- bzw. Datenverarbeitungseinheit zu den Steuermitteln und/oder einer weiteren vorrichtungsseitigen Datenverarbeitungseinheit (34) übertragen werden können
und/oder als Reaktion auf eine vorrichtungsseitige datenmäßige Anforderung anforderungsspezifische Konfigurationsdaten durch die Server- bzw. Datenverarbeitungseinheit zu den Steuermitteln übertragen werden können, **dadurch gekennzeichnet,**
**dass** die Steuermittel und/oder die Server- bzw. Datenverarbeitungseinheit zum Erzeugen und Speichern von benutzeridentifizierenden und/oder benutzerindividualisierenden Daten aus den erzeugten Betriebsdaten ausgebildet sind/ist
und die betriebszustandspezifischen Daten und/oder die anforderungsspezifischen Konfigurationsdaten auf der Basis der benutzeridentifizierenden bzw. der benutzerindividualisierenden Daten (32) erzeugt werden.

2. Vorrichtung nach Anspruch 1, **gekennzeichnet durch** eine mit den Steuermitteln zusammenwirkende akustische und/oder optische Ausgabeeinheit (18), die zum Ausgeben von mit den betriebszustandsspezifischen Daten und/oder mit den anforderungsspezifischen Daten verknüpften Informationen an eine Bedienperson ausgebildet ist.

3. Vorrichtung nach Anspruch 2, **dadurch gekennzeichnet, dass** die Ausgabeeinheit am oder im Vorrichtungsgehäuse vorgesehen ist und/oder ein Text- und/oder grafikfähiges Display aufweist.

4. Vorrichtung nach Anspruch 2 oder 3, **dadurch gekennzeichnet, dass** die Informationen Betriebsanweisungen, Einstellungsanweisungen, Fehlerbehebungsanweisungen, Wartungsanweisungen, Entsorgungsanweisungen oder Werbe- und/oder Verkaufsförderungsinformationen aufweisen.

5. Vorrichtung nach einem der Ansprüche 1 bis 4, **dadurch gekennzeichnet, dass** die Betriebsdaten Zeiterfassungsdaten betreffend eine aktuelle, eine vorhergehende und/oder eine kumulierte Betriebs- und/oder Einschaltdauer der Steuermittel und/oder der Brüh- bzw. Zerkleinerungsmittel aufweisen.

6. Vorrichtung nach einem der Ansprüche 1 bis 5, **dadurch gekennzeichnet, dass** die Betriebsdaten Temperatur- und/oder Füllstandsdaten der Brüh- bzw. Zerkleinerungsmittel und/oder eines im oder am Vorrichtungsgehäuse vorgesehen Flüssigkeitsbehälters aufweisen.

7. Vorrichtung nach einem der Ansprüche 1 bis 6, **dadurch gekennzeichnet, dass** die weitere vorrichtungsseitige Datenverarbeitungseinheit (34) mobil oder portabel ausgestaltet ist, drahtlos mit den Steuermitteln zusammenwirkt und eine Displayeinheit (38) und/oder eine manuelle Eingabeeinheit (38) aufweist.

8. Vorrichtung nach einem der Ansprüche 1 bis 7, **dadurch gekennzeichnet, dass** das öffentliche Datenübertragungsnetz (34) das ein Internet-Datenübertragungsprotokoll realisierende Internet ist und die Server- bzw. Datenverarbeitungseinheit zum Kommunizieren mit einer Mehrzahl von jeweils separat datenmäßig angebundenen der Heißgetränk-Bereitungsvorrichtungen ausgebildet ist.

9. Vorrichtung nach einem der Ansprüche 1 bis 8, **dadurch gekennzeichnet, dass** das Heißgetränk ein Kaffeegetränk ist und die Zerkleinerungsmittel ein Kaffeebohnen-Mahlwerk aufweisen.

## Claims

1. A device for automatically preparing a hot beverage having brewing and/or crushing means (12) provided in a device housing (10) for a base material of the hot beverage as well as controlling means (16) allocated thereto,
which control a preparation mode for preparing a hot beverage in response to a preferably manual operation of an operating unit (20) provided at or in the device housing, an electronic data transmission interface (22) for a bidirectional transmission of the configuration data, which influence the preparation mode, and/or the operating data, which are generated from the preparation mode, via a preferably public data transmission network (24) to a server and/or data processing unit (11) connected so as to transmit data being allocated to the controlling means in such a manner that in response to a predetermined operating state detected from the operating data, in particular a maintenance and/or error operating state, data specific to the operating state can be transmitted from the server and/or data processing unit to the controlling means and/or to a further data processing unit (34) on the side of the device,
and/or in response to a demand on the side of the device connected so as to transmit data, configuration data specific to demands can be transmitted to the controlling means via the server and/or data processing unit,
**characterized in that**
the controlling means and/or the server and/or data processing unit is configured for generating and storing data identifying and/or being individual to the user from the generated operating data,
and the data specific to the operating state and/or the configuration data specific to demands are generated based on the data (32) identifying and/or being individual to the user.

2. The device according to claim 1, **characterized by** an output unit (18), which acoustically and/or optically interacts with the controlling means and is realized for discharging information connected to the data specific to the operating state and/or the data specific to demands to a user.

3. The device according to claim 2, **characterized in that** the output unit is provided at or in the device housing and/or comprises a display capable of displaying texts and/or graphics.

4. The device according to claim 2 or 3, **characterized in that** the information comprises operating instructions, setting instructions, debugging instructions, maintenance instructions, disposal instructions or advertisement and/or sales promotion information.

5. The device according to any one of the claims 1 to 4, **characterized in that** the operating data comprise time management data regarding a current, a previous and/or a cumulative operating and/or booting time of the controlling means and/or of the brewing and/or crushing means.

6. The device according to any one of the claims 1 to 5, **characterized in that** the operating data comprise temperature and/or filling level data of the brewing and/or crushing means and/or of a liquid container provided in or at the device housing.

7. The device according to any one of the claims 1 to 6, **characterized in that** the further data processing unit (34) on the side of the device is realized to be mobile or portable, interacts wireless with the controlling means and comprises a display unit (38) and/or a manual entry unit (38).

8. The device according to any one of the claims 1 to 7, **characterized in that** the public data transmission network (34) is the Internet realizing an internet data transmission protocol, and the server and/or data processing unit is realized for communicating with a plurality of hot-beverage preparation devices each separately connected so as to transmit data.

9. The device according to any one of the claims 1 to 8, **characterized in that** the hot beverage is a coffee beverage and the crushing means comprise a grinding gear for coffee beans.

## Revendications

1. Dispositif pour la préparation automatique d'une boisson chaude ayant des moyens de préparation et/ou de broyage (12) prévus dans un boîtier de dispositif (10) pour un matériau de base de la boisson chaude ainsi que des moyens de contrôle (16) attribués à ceci,
qui contrôlent un mode de préparation pour la préparation d'une boisson chaude en réponse à une opération préférablement manuelle d'une unité de commande (20) prévue au ou dans le boîtier de dispositif, une interface de transmission des données (22) pour la transmission bidirectionnelle des données de configuration qui influencent le mode de préparation et/ou des données d'opération qui sont générées du mode de préparation par un réseau de transmission des données (24), qui est de préférence publique, à une unité de serveur et/ou de traitement de données (11) reliée de manière à transmettre des données étant attribuée aux moyens de contrôle de telle manière qu'
en réponse à un état de fonctionnement prédéterminé détecté des données d'opération, en particulier l'état d'opération de maintenance et/ou d'opération d'erreur, des données particulières à l'état d'opération peuvent être transmises de l'unité de serveur et/ou de traitement de données aux moyens de contrôle et/ou à une outre unité de traitement de données (34) sur le côté du dispositif, et/ou en réponse à une demande sur le côté du dispositif reliée de manière à transmettre des données, des données de configuration particulières aux demandes peuvent être transmises aux moyens de contrôle par l'unité de serveur et/ou de traitement de données,
**caractérisé en ce que**
les moyens de contrôle et/ou l'unité de serveur et/ou de traitement de données sont configurés pour générer et pour stocker des données identifiant et/ou étant individuel à l'utilisateur des données d'opération générées,
et les données particulières à l'état d'opération et/ou les données de configuration particulières aux demandes sont générées sur la base des données (32) identifiant et/ou étant individuel à l'utilisateur.

2. Dispositif selon la revendication 1, **caractérisé par** une unité de sortie (18), qui interagit avec les moyens de contrôle de manière acoustique et/ou optique et est réalisée pour sortir des informations à un utilisateur qui sont reliées aux données particulières à l'état d'opération et/ou aux données particulières aux demandes.

3. Dispositif selon la revendication 2, **caractérisé en ce que** l'unité de sortie est prévue au ou dans le boîtier de dispositif et/ou comprend un écran capable à afficher des textes et/ou des graphiques.

4. Dispositif selon la revendication 2 ou 3, **caractérisé en ce que** les informations comprennent des instructions d'opération, des instructions d'ajustement, des instructions de dépannage, des instructions de maintenance, des instructions d'élimination ou des informations commerciales et/ou de promotion des ventes.

5. Dispositif selon l'une quelconques des revendications 1 à 4, **caractérisé en ce que** les données d'opération comprennent des donnés de saisie des heures en regard d'une duration d'opération et/ou de démarrage actuelle, précédentes et/ou cumulative des moyens de contrôle et/ou des moyens de préparation et/ou de broyage.

6. Dispositif selon l'une quelconques des revendications 1 à 5, **caractérisé en ce que** les données d'opération comprennent des données de température et/ou de niveau de remplissage des moyens de préparation et/ou de broyage et/ou d'un conteneur de liquide prévu dans le ou au boîtier de dispositif.

7. Dispositif selon l'une quelconques des revendications 1 à 6, **caractérisé en ce que** l'outre unité de traitement de données (34) sur le côté du dispositif est réalisée à être mobile or portable, interagit avec les moyens de contrôle sans fils et comprend une unité d'écran (38) et/ou une unité d'entrée manuelle (38).

8. Dispositif selon l'une quelconques des revendications 1 à 7, **caractérisé en ce que** le réseau de transmission de données publique (34) est l'Internet réalisant un protocole de transmission de données d'Internet, et l'unité de serveur et/ou de traitement de données est réalisée pour la communication avec une pluralité de dispositifs de préparation pour une boisson chaude, chaque dispositif de préparation pour une boisson chaude étant relié séparément de manière à transmettre des données.

9. Dispositif selon l'une quelconques des revendications 1 à 8, **caractérisé en ce que** la boisson chaude est une boisson au café et les moyens de broyage comprennent un moulin à grains de café.
